(19) Europäisches Patentamt
European Patent Office
Office européen des brevets

(11) **EP 2 211 149 B1**

(12) **EUROPÄISCHE PATENTSCHRIFT**

(45) Veröffentlichungstag und Bekanntmachung des Hinweises auf die Patenterteilung:
**14.01.2015 Patentblatt 2015/03**

(51) Int Cl.:
***G01D 5/20*** *(2006.01)*

(21) Anmeldenummer: **09165891.4**

(22) Anmeldetag: **20.07.2009**

(54) **Weg-/Positionsmessvorrichtung**

Route/position measurement device

Dispositif de mesure de trajectoire et de position

(84) Benannte Vertragsstaaten:
**AT BE BG CH CY CZ DE DK EE ES FI FR GB GR
HR HU IE IS IT LI LT LU LV MC MK MT NL NO PL
PT RO SE SI SK SM TR**

(30) Priorität: **22.07.2008 DE 102008035326**

(43) Veröffentlichungstag der Anmeldung:
**28.07.2010 Patentblatt 2010/30**

(73) Patentinhaber: **BALLUFF GmbH
73765 Neuhausen (DE)**

(72) Erfinder: **Fericean, Sorin
71229 Leonberg (DE)**

(74) Vertreter: **Hoeger, Stellrecht & Partner
Patentanwälte
Uhlandstrasse 14c
70182 Stuttgart (DE)**

(56) Entgegenhaltungen:
**EP-A1- 0 340 317     DE-A1- 4 337 208**

**Beschreibung**

Die Erfindung betrifft eine Weg-/Positionsmessvorrichtung, umfassend eine Sensoreinrichtung, welche sich in einer ersten Richtung erstreckt, einen Geber, welcher in einer zweiten Richtung senkrecht zur ersten Richtung oberhalb der Sensoreinrichtung beabstandet zu dieser positioniert ist, wobei die Sensoreinrichtung und der Geber induktiv koppeln, und eine Auswertungseinrichtung, mittels welcher die relative Position der Sensoreinrichtung und des Gebers in der ersten Richtung ermittelbar ist.

Aus der DE 39 14 787 A1 ist eine Geberanordnung zur Messung von linearen oder rotatorisch verlaufenden Bewegungen bekannt, wobei Bewegungen der oben genannten Arten über geeignete mechanische Koppelglieder auf einen oder mehrere bewegliche Permanent- oder Elektromagneten bzw. einer Kombination dieser übertragen werden und durch Einwirkung von zugehörigen Magnetfeldern auf Kernmaterialien von zugeordneten elektrischen Spulen eine eindeutige Veränderung induktiver Eigenschaften solcher Spulen erzielt.

Aus der DE 1 284 101 ist eine Anordnung zur berührungslosen Verschiebungsmessung, bestehend aus gegenüber einer mit einem Messobjekt verbundenen Zunge aus ferromagnetischem Material angeordneten Polschuhpaaren zweier ferromagnerischer Spulenkerne, und Mitteln zur Messung der Summe und/oder Differenz der induktiven Leitwerte auf die Spulenkerne gewickelter Spulen, bekannt. Die der Zunge gegenüberliegenden Polschuhflächen sind derart gegensinnig gegen die Bewegungsrichtung der Zunge geneigt, dass sich bei Verschiebung der Zunge die Luftspaltlängen zwischen Zunge und Polschuhflächen gegensinnig ändern.

Aus der DE 10 2004 032 258 A1 ist ein induktiver Näherungssensor mit einer Sensorspuleneinrichtung zur Detektion eines metallischen Targets und einer Referenzspuleneinrichtung mit mindestens einer Spule bekannt. Die Referenzspuleneinrichtung und die Sensorspuleneinrichtung sind so angeordnet und ausgebildet, dass eine definierte Differenz des Bedämpfungseinflusses einer metallischen Umgebungseinrichtung auf die Sensorspuleneinrichtung und die Referenzspuleneinrichtung eingestellt ist, mindestens wenn die Sensorspuleneinrichtung und die Referenzspuleneinrichtung in einer bestimmten Position zu der Umgebungseinrichtung sind. Der Einfluss der Umgebungseinrichtung auf ein Sensorausgangssignal ist eliminiert.

Aus der DE 103 54 694 A1 ist ein induktiver Sensor mit wenigstens einer auf einem Träger angeordneten Leiterbahn, die wenigstens Teil einer Spule bildet, sowie mit einem der Spule zugeordneten Spulenkern bekannt. Der Träger ist mehrschichtig aufgebaut und äußere Schichten tragen Leiterbahnabschnitte, die über Kontaktierungen verbunden sind, sodass die Leiterbahnabschnitte der Schichten zu durchgehenden Wicklungen der Spule vervollständigt sind und zwischen den äußeren Schichten ist der Spulenkern angeordnet.

Der Erfindung liegt die Aufgabe zugrunde, eine Weg-/Positionsmessvorrichtung der eingangs genannten Art bereitzustellen, bei welcher eine Kompensation in der zweiten Richtung möglich ist.

Diese Aufgabe wird bei der eingangs genannten Weg-/Positionsmessvorrichtung erfindungsgemäß dadurch gelöst, dass die Sensoreinrichtung eine erste Spulen-Spulenkern-Einrichtung mit einer an einem ersten Spulenkern angeordneten ersten Spule mit einer ersten Spulenachse aufweist, bei welcher eine dem Geber zugewandte Oberseite des ersten Spulenkerns parallel zur ersten Richtung orientiert ist und die erste Spulenachse senkrecht zur ersten Richtung orientiert ist, und dass die Sensoreinrichtung eine zweite Spulen-Spulenkern-Einrichtung mit einer an einem zweiten Spulenkern angeordneten zweiten Spule mit einer zweiten Spulenachse aufweist, bei welcher mindestens eine Einhüllendenebene einer Oberseite des zweiten Spulenkerns, welcher dem Geber zugewandt ist, gegenüber der ersten Richtung geneigt ist und/oder die zweite Spulenachse gegenüber der ersten Spulenachse geneigt ist.

Bei der erfindungsgemäßen Lösung umfasst die Sensoreinrichtung an jeweiligen Sensorkernen angeordnete Spulen. Im einfachsten Falle genügen zwei Spulen zur Wegbestimmung bzw. Positionsbestimmung. Die jeweiligen Spulen sind beispielsweise an dem zugeordneten Sensorkern gewickelt oder die Spulen sind beispielsweise auf Flexprint gedruckt mit eingebettetem Kern.

Als Spulenkerne lassen sich insbesondere Ferritkerne verwenden. Es lassen sich dadurch die Erfahrungen im Zusammenhang mit solchen Kernen verwenden. Die Weg-/Positionsmessvorrichtung lässt sich dadurch auf einfache Weise herstellen unter Minimierbarkeit der benötigten Spulen.

Bei der erfindungsgemäßen Lösung lässt sich über die erste Spulen-Spulenkern-Einrichtung eine erste Spur und über die zweite Spulen-Spulenkern-Einrichtung eine zweite Spur bereitstellen, welche unterschiedliche Ankopplungsstärken aufweisen. Die Kopplungsstärke zwischen dem Geber und der ersten Spulen-Spulenkern-Einrichtung ist, wenn der Abstand in der zweiten Richtung des Gebers zu der ersten Spulen-Spulenkern-Einrichtung erhalten bleibt, mindestens in einem bestimmten Messbereich unabhängig von der Position des Gebers längs der ersten Richtung. Die Kopplungsstärke der Ankopplung des Gebers an die zweite Spulen-Spulenkern-Einrichtung ist dabei aufgrund der Neigung der Einhüllendenebene der Oberseite des zweiten Spulenkerns und/oder der relativen Neigung der zweiten Spule zu der ersten Spule abhängig von der Position des Gebers längs der ersten Richtung. Es ist dadurch möglich, zwei unterschiedliche Signale zu gewinnen und in diesen Signalen den Anteil bezogen auf die erste Richtung und den Anteil bezogen auf die zweite Richtung zu trennen. Dadurch wiederum ist beispielsweise möglich, eine z-Kompensation bezüglich des Abstands des Gebers zu der Sensoreinrichtung in der zweiten Richtung durchzuführen. Es lässt sich dadurch ein Signal gewinnen, welches unabhängig von der Position des Gebers in der zweiten Richtung ist, oder diese Abhängigkeit ist zumindest reduziert.

Durch die erfindungsgemäße Lösung ist es auch möglich, die Linearität einer Sensorkennlinie zu verbessern. Es ist weiterhin möglich, die Auflösung zu verbessern bzw. Temperaturdrifts zu kompensieren. Es ist möglich, beispielsweise die Steigerung der Form einer Sensorkennlinie durch entsprechende Verwendung eines Spulenkernprofils definiert einzustellen.

Weiterhin ist es möglich, eine parasitäre, seitliche Beeinflussung einer Einbauumgebung der Weg-/Positionsmessvorrichtung zu reduzieren, da über die erste Spulen-Spulenkern-Einrichtung und die zweite Spulen-Spulenkern-Einrichtung eine mindestens partielle Kompensierbarkeit erreichbar ist.

Bei einem vorteilhaften Ausführungsbeispiel sind die erste Spulen-Spulenkern-Einrichtung und die zweite Spulen-Spulenkern-Einrichtung stabförmig ausgebildet. Die Spulen-Spulenkern-Einrichtungen erstrecken sich in der ersten Richtung mit ihrer größten Länge. In der ersten Richtung lässt sich dann die Position des Gebers relativ zu der Sensoreinrichtung ermitteln.

Ganz besonders vorteilhaft ist es, wenn die erste Spulen-Spulenkern-Einrichtung und die zweite Spulen-Spulenkern-Einrichtung parallel zueinander angeordnet sind und dabei längs der ersten Richtung ausgerichtet sind. Dadurch werden eine erste Spur und eine zweite Spur bereitgestellt, wobei die entsprechenden Signale sich vergleichen lassen und dadurch beispielsweise eine z-Kompensation durchführbar ist.

Günstig ist es, wenn der Geber ein (passives) Metallelement ist. Es lässt sich dadurch eine rein induktive Kopplung des Gebers an die Sensoreinrichtung realisieren. Das System reagiert auf "nicht kooperative" Geber (passive Geber) wie beispielsweise ein Metallteil. Dadurch lassen sich Objekte, deren Weg bzw. Position erfasst werden soll, unmittelbar und direkt als Geber verwenden. Gegenüber Systemen mit "kooperativen" Gebern (aktiven Gebern) besteht der Vorteil, dass keine mechanische Befestigung des kooperativen Gebers an dem zu detektierenden Objekt benötigt wird.

Insbesondere überlappt der Geber die erste Spulen-Spulenkern-Einrichtung und die zweite Spulen-Spulenkern-Einrichtung. Dadurch ist eine Ankopplung des Gebers an die beiden Spulen-Spulenkern-Einrichtungen ermöglicht, sodass wiederum eine Vergleichbarkeit von entsprechenden Signalen ermöglicht ist. Vorteilhafterweise sind Kopplungsbereiche des Gebers an die erste Spulen-Spulenkern-Einrichtung und an die zweite Spulen-Spulenkern-Einrichtung gleich ausgebildet, wobei sie insbesondere die gleiche geometrische Form aufweisen, sodass eine Vergleichbarkeit von entsprechenden Signalen gewährleistet ist.

Bei einem Ausführungsbeispiel liegt die Neigung der mindestens einen Einhüllendenebene und/oder die Neigung der zweiten Spulenachse zur ersten Spulenachse in einem Bereich zwischen 0,5° und 10°. Es hat sich gezeigt, dass dadurch bei einfacher Herstellbarkeit sich gute Ergebnisse beispielsweise bezüglich einer z-Kompensation (Unabhängigkeit des Abstands des Gebers zur Sensoreinrichtung in der zweiten Richtung) erreichbar ist.

Vorteilhafterweise sind bei der ersten Spulen-Spulenkern-Einrichtung die erste Spule und bei der zweiten Spulen-Spulenkern-Einrichtung die zweite Spule gegenüber der jeweiligen Oberseite zurückgesetzt angeordnet. Dadurch wird die Kopplungsstärke in einem wesentlichen Anteil durch die Oberseite des Spulenkerns in dessen relativer Lage zu dem Geber beeinflusst.

Bei einem Ausführungsbeispiel ist die zweite Spulen-Spulenkern-Einrichtung als Ganzes gegenüber der ersten Richtung geneigt. Dadurch lässt sich die Kopplungsstärke derart beeinflussen, dass diese abhängig ist von der Position des Gebers längs der ersten Richtung.

Beispielsweise ist der Neigungswinkel feststellbar einstellbar. Dadurch ist eine Anpassung an lokale Gegebenheiten möglich.

Vorteilhafterweise ist eine erste Oszillatorschaltung vorgesehen, welche die erste Spule umfasst, und eine zweite Oszillatorschaltung vorgesehen, welche die zweite Spule umfasst. Durch die Oszillatorschaltungen lassen sich Oszillatorenschwingungen anregen. Durch die induktive Ankopplung des Gebers an die jeweiligen Spulen lassen sich die Schwingungen beeinflussen und über das Schwingungsverhalten lässt sich die Kopplungsstärke ermitteln. Daraus wiederum lässt sich die Position des Gebers ermitteln.

Es hat sich als günstig erwiesen, wenn die erste Oszillatorschaltung und die zweite Oszillatorschaltung unterschiedliche Oszillatorfrequenzen aufweisen, das heißt mit unterschiedlichen Frequenzen angeregt werden. Dadurch lassen sich Sequenzkopplungen vermeiden. Eine typische Größenordnung für den Frequenzunterschied liegt beispielsweise bei 200 kHz.

Es hat sich als vorteilhaft erwiesen, wenn die Auswertungseinrichtung eine Differenzauswertung und/oder Summenauswertung (beispielsweise nach Invertierung eines Oszillatorausgangssignals) von Oszillatorausgangssignalen der ersten Oszillatorschaltung und der zweiten Oszillatorschaltung durchführt. Dadurch lässt sich auf einfache Weise der Einfluss des Abstands des Gebers in der zweiten Richtung (z-Abstand) verringern und im Idealfall kompensieren.

Vorteilhafterweise ist ein Betrieb der ersten Oszillatorschaltung und der zweiten Oszillatorschaltung in einem Bereich mit mindestens näherungsweise linearer Kennlinie vorgesehen. Dadurch ergibt sich eine einfache Auswertbarkeit.

Bei einer Ausführungsform ist die Oberseite der ersten Spulen-Spulenkern-Einrichtung eben. Dies trägt dazu bei, dass die Kopplungsstärke der induktiven Kopplung des Gebers an die erste Spulen-Spulenkern-Einrichtung unabhängig von der Position des Gebers längs der ersten Richtung ist.

Die Oberseite der zweiten Spulen-Spulenkern-Einrichtung kann eben sein oder sie kann eine Abweichung von der Ebenheit insbesondere zur Kennlinieneinstellung aufweisen. Die Abweichung von der Ebenheit kann genutzt werden, um eine definierte Kennlinie einzustellen.

Vorteilhafterweise ist bei unterschiedlichen Positionen des Gebers längs der ersten Richtung der Abstand des Gebers in der zweiten Richtung zu einem Bereich der ersten Spulen-Spulenkern-Einrichtung, welcher für die induktive Ankopplung des Gebers wirksam ist, konstant. Dadurch ist die Kopplungsstärke unabhängig von der Position des Gebers längs der ersten Richtung. Sie ist dagegen abhängig von dem Abstand des Gebers zu der ersten Spulen-Spulenkern-Einrichtung parallel zur zweiten Richtung.

Vorteilhafterweise ist der Abstand des Gebers zu der Oberseite der ersten Spulen-Spulenkern-Einrichtung konstant und der Abstand zu der ersten Spule konstant. Der Geber ist dann so geführt, dass für die Positionsbestimmung dieser Abstand sich nicht ändert. Bei der erfindungsgemäßen Lösung ist es grundsätzlich auch möglich, dass der Abstand in der zweiten Richtung variiert. Durch die erfindungsgemäße Lösung ist eine solche Abstandsvariation bezüglich eines Ausgangssignals kompensierbar; die Abstandsvariation wirkt sich dabei gleichzeitig auf die Kopplungsstärke der ersten Spulen-Spulenkern-Einrichtung und der zweiten Spulen-Spulenkern-Einrichtung aus.

Ferner ist es günstig, wenn der Abstand des Gebers in der zweiten Richtung zu einem für die induktive Ankopplung des Gebers wirksamen Bereich der zweiten Spulen-Spulenkern-Einrichtung abhängig ist von der Position des Gebers längs der ersten Richtung. Dadurch lässt sich auf einfache Weise eine Abhängigkeit eines entsprechenden Ausgangssignals von der Position des Gebers längs der ersten Richtung erreichen. Dies ermöglicht eine Wegbestimmung bzw. Positionsbestimmung.

Bei einem Ausführungsbeispiel ist eine Führungseinrichtung vorgesehen, welche den Geber zu der Sensoreinrichtung in einer definierten Position ausgerichtet hält. Beispielsweise wird der Geber parallel zur ersten Richtung ausgerichtet gehalten.

Vorteilhaft ist es, wenn die erste Spule und die zweite Spule gleich ausgebildet sind. Ferner ist es vorteilhaft, wenn der erste Spulenkern und der zweite Spulenkern bis auf die Neigung gleich ausgebildet sind. Dadurch weisen die erste Spulen-Spulenkern-Einrichtung und die zweite Spulen-Spulenkern-Einrichtung für die Kopplungsstärke der induktiven Ankopplung des Gebers gleiche oder zumindest sehr ähnliche Parameter auf. Dadurch wiederum lässt sich auf einfache Weise eine z-Kompensation erreichen.

Günstig ist es, wenn ein Abstand zwischen einer Unterseite der ersten Spulen-Spulenkern-Einrichtung und der Oberseite der ersten Spulen-Spulenkern-Einrichtung konstant ist. Dadurch lässt sich auf einfache Weise eine Unabhängigkeit der Kopplungsstärke des Gebers von der Position des Gebers längs der ersten Richtung erreichen. Vorzugsweise ist dann die erste Spule an dem ersten Spulenkern so angeordnet, dass die erste Spulenachse senkrecht zu der Oberseite und der Unterseite ist.

Die nachfolgende Beschreibung bevorzugter Ausführungsformen dient im Zusammenhang mit den Zeichnungen der näheren Erläuterung der Erfindung. Es zeigen:

Figur 1       eine Draufsicht auf ein erstes Ausführungsbeispiel einer erfindungsgemäßen Weg-/Positionsmessvorrichtung in schematischer Darstellung;

Figur 2       eine seitliche Ansicht der Weg-/Positionsmessvorrichtung gemäß Figur 1;

Figur 3       eine Ansicht der Weg-/Positionsmessvorrichtung gemäß Figur 1 in der Richtung A;

Figur 4       eine schematische Darstellung eines Ausführungsbeispiels eines Spulenkerns in einer zweiten Spulen-Spulenkern-Einrichtung;

Figur 5       eine Draufsicht auf den Spulenkern gemäß Figur 4;

Figur 6       eine Schnittansicht des Spulenkerns gemäß der Figur 5 längs der Linie 6-6;

Figur 7       eine schematische Teildarstellung eines zweiten Ausführungsbeispiels einer erfindungsgemäßen Weg-/Positionsmessvorrichtung;

Figur 8       eine schematische Teildarstellung eines dritten Ausführungsbeispiels einer erfindungsgemäßen Weg-/Positionsmessvorrichtung;

Figur 9(a)   schematisch die Abhängigkeit eines Ausgangssignals $S_1$ einer ersten Oszillatorschaltung von der Position eines Gebers längs einer ersten Richtung;

Figur 9(b)   die Abhängigkeit des Ausgangssignals $S_1$ der ersten Oszillatorschaltung in Abhängigkeit von einem Abstand des Gebers zu einer Sensoreinrichtung in einer zweiten Richtung;

Figur 9(c)   die Abhängigkeit eines Ausgangssignals $S_2$ einer zweiten Oszillatorschaltung in Abhängigkeit von der Position des Gebers längs der ersten Richtung;

Figur 9(d)   die Abhängigkeit des Ausgangssignals $S_2$ der zweiten Oszillatorschaltung in Abhängigkeit von dem Abstand des Gebers zu der Sensoreinrichtung in der zweiten Richtung;

Figur 10   schematisch ein weiteres Ausführungsbeispiel eines Sensorkerns; und

Figur 11   schematisch einen Kennlinienverlauf mit unterschiedlichen Segmenten.

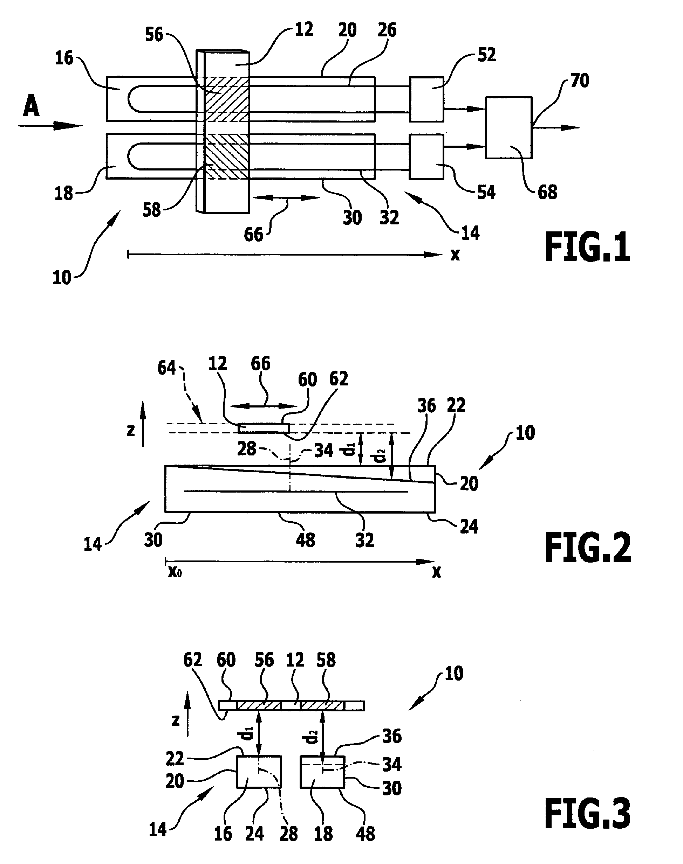

Ein erstes Ausführungsbeispiel einer erfindungsgemäßen Weg-/Positionsmessvorrichtung, welches in den Figuren 1 bis 3 schematisch gezeigt und dort mit 10 bezeichnet ist, umfasst einen Geber 12 und eine Sensoreinrichtung 14. Die Sensoreinrichtung 14 erstreckt sich mit einer Längsrichtung in einer ersten Richtung x (Messrichtung). Der Geber ist beabstandet zu der Sensoreinrichtung 14 in einer zweiten Richtung z oberhalb der Sensoreinrichtung 14 beabstandet zu dieser positioniert. Über die Weg-/Positionsmessvorrichtung 10 lässt sich die Position des Gebers 12 in der ersten Richtung x berührungslos bestimmen.

Die Sensoreinrichtung 14 umfasst eine erste Spulen-Spulenkern-Einrichtung 16 und eine zweite Spulen-Spulenkern-Einrichtung 18. Die erste Spulen-Spulenkern-Einrichtung 16 weist einen ersten Spulenkern 20 auf, welcher sich in der ersten Richtung x erstreckt und parallel zu dieser ausgerichtet angeordnet ist. Der erste Spulenkern 20 ist beispielsweise als Ferrit-Schalenkern ausgebildet.

Der erste Spulenkern 20 weist eine Oberseite 22 auf, welche dem Geber 12 zugewandt ist und welche im Wesentlichen eben ausgebildet ist. Ferner weist er eine Unterseite 24 auf, welche der Oberseite 22 gegenüber liegt und welche ebenfalls eben ausgebildet ist. Die Oberseite 22 und die Unterseite 24 sind parallel zueinander, sodass sich der erste Spulenkern 20, welcher sich zwischen der Oberseite 22 und der Unterseite 24 erstreckt, über die erste Richtung x eine gleich bleibende Höhe aufweist.

Der erste Spulenkern 20 ist stabförmig ausgebildet, wobei der Stab bei einem Ausführungsbeispiel einen ovalen Querschnitt aufweist. (Dies wird im Zusammenhang mit der zweiten Spulen-Spulenkern-Einrichtung 18 noch näher erläutert.)

An dem ersten Spulenkern 20 sitzt eine erste Spule 26, welche mindestens eine und vorzugsweise eine Mehrzahl von Windungen aufweist. Eine erste Spulenachse 28 (Figur 2) der ersten Spule 26 liegt senkrecht zu der ersten Richtung x und ist parallel zur zweiten Richtung z. Damit sind Windungsebenen der ersten Spule 26 parallel zur ersten Richtung x und die zweite Richtung z bildet eine Normalenrichtung zu den Windungsebenen. Die Länge der ersten Spule 26 in der ersten Richtung x definiert die maximale Messstrecke.

Die erste Spule 26 ist an dem ersten Spulenkern 20 so angeordnet, dass diese nicht über die Oberseite 22 hinausragt und insbesondere gegenüber der Oberseite 22 zurückgesetzt ist.

Die zweite Spulen-Spulenkern-Einrichtung 18 umfasst einen zweiten Spulenkern 30, an dem eine zweite Spule 32 angeordnet ist. Die zweite Spule 32 weist eine zweite Spulenachse 34 auf, welche parallel zur ersten Spulenachse 28 ist.

Die erste Spule 26 und die zweite Spule 32 sind bei einem bevorzugten Ausführungsbeispiel grundsätzlich gleich ausgebildet. Sie weisen die gleiche geometrische Gestalt und die gleiche geometrische Orientierung im Raum auf, wobei sie parallel zueinander angeordnet sind.

Der zweite Spulenkern 30 hat eine Oberseite 36, welche dem Geber 12 zugewandt ist, und welche gegenüber der ersten Richtung x geneigt ist. Diese Oberseite 36 ist dadurch auch gegenüber der Oberseite 22 des ersten Spulenkerns 20 geneigt.

Es ist dabei grundsätzlich möglich, dass die Oberseite 36 eben ausgebildet ist. Es ist auch möglich, dass die Oberseite 36 nicht eben ausgebildet ist. In diesem Fall ist dann (mindestens) eine Einhüllendenebene der Oberseite 36 des zweiten Spulenkerns 30 bezüglich des ersten Spulenkerns 20 relativ zu der ersten Richtung x geneigt.

Ein typischer Winkel für die Neigung liegt im Bereich zwischen 0,5° und 10°. Bei einem konkreten Ausführungsbeispiel liegt der Neigungswinkel bei ca. 1,7°.

Der erste Spulenkern 20 und der zweite Spulenkern 30 sind vorzugsweise so zueinander angeordnet, dass an einem Punkt $x_0$ die Oberseite 22 des ersten Spulenkerns 20 und die Oberseite 36 des zweiten Spulenkerns 30 auf der gleichen Höhe in der zweiten Richtung z liegen.

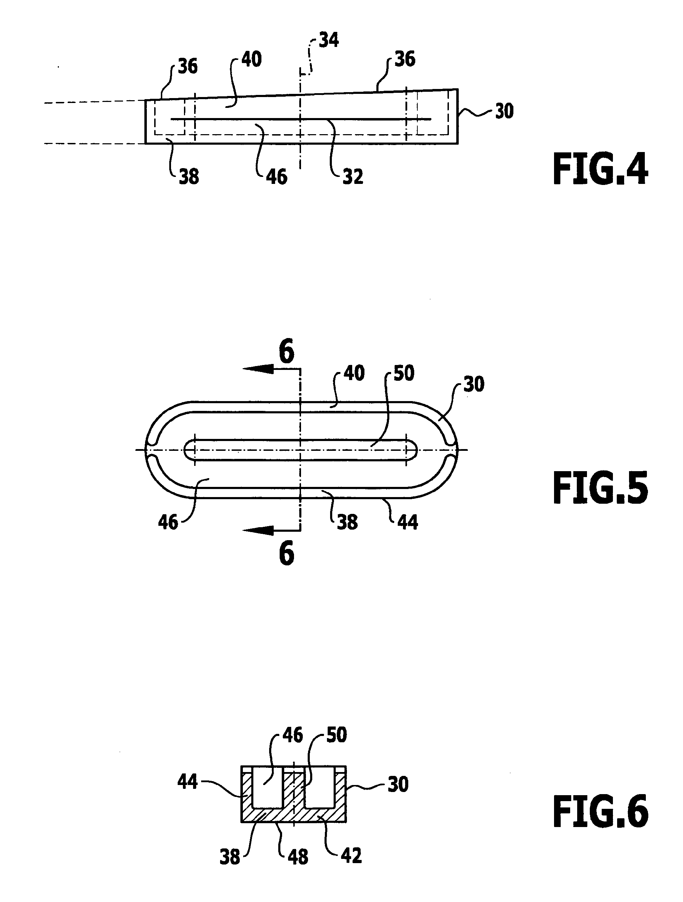

Bei einem Ausführungsbeispiel eines zweiten Spulenkerns 30, welches in den Figuren 4 bis 6 gezeigt ist, ist der zweite Spulenkern 30 als Schalenkern 38 ausgebildet. Er umfasst ein schalenförmiges Element 40 mit einem Boden 42. Der Boden 42 hat in der Draufsicht eine ovale Gestalt mit einer längeren Seite, welche parallel zur ersten Richtung x ist und mit einer kürzeren Seite, welche senkrecht zur ersten Richtung x ist. An dem Boden 42 sind Wände 44 angeordnet, welche umlaufend sind. Zwischen den Wänden 44 und dem Boden 42 ist ein Innenraum 46 gebildet.

Der Boden 42 hat eine Unterseite 48, welche eine Unterseite des zweiten Spulenkerns 30 definiert. Diese Unterseite 48 ist vorzugsweise auf der gleichen Höhe angeordnet wie die Unterseite 24 des ersten Spulenkerns 20.

In dem Innenraum 46 ist ein Steg 50 angeordnet, welcher parallel zur ersten Richtung x ausgerichtet ist. Die Länge dieses Stegs 50 ist kleiner als die Gesamtlänge des zweiten Spulenkerns 30. Die zweite Spule 32 ist um diesen Steg 50 gewickelt.

Die Oberseite 36 des zweiten Spulenkerns 30 ist bei dem gezeigten Ausführungsbeispiel eben ausgebildet. Sie ist gegenüber dem Boden 42 ("leicht") geneigt, das heißt die Unterseite 48 und die Oberseite 36 schließen einen Winkel ein, welcher insbesondere in der Größenordnung zwischen 0,5° und 10° liegt.

Die zweite Spule 32 liegt unterhalb der Oberseite 36. Die zweite Spulenachse 34 liegt senkrecht zur Unterseite 48.

Der erste Spulenkern 20 ist grundsätzlich gleich ausgebildet, wobei dort die Oberseite 22 nicht gegenüber der Unterseite 24 geneigt ist, sondern die Oberseite 22 parallel zur Unterseite 24 ist.

Grundsätzlich weisen die erste Spule 26 und die zweite Spule 32 Windungen auf, deren Querschnitt längs der ersten Richtung x und in einer Richtung quer zur ersten Richtung x (in einer y-Richtung senkrecht zur zweiten Richtung z) nicht variiert.

Die erste Spulen-Spulenkern-Einrichtung 16 ist Teil einer ersten Oszillatorschaltung 52, wobei die entsprechende erste Oszillatorschaltung 52 durch induktive Ankopplung des Gebers 12 beeinflussbar ist. Die zweite Spulen-Spulenkern-Einrichtung 18 ist Teil einer zweiten Oszillatorschaltung 54, welche ebenfalls durch induktive Ankopplung des Gebers 12 beeinflussbar ist.

Der Geber 12 ist ein Metallelement beispielsweise in Form eines Metallplättchens. Er weist eine solche Breite auf, dass er induktiv sowohl an die erste Spulen-Spulenkern-Einrichtung 16 als auch an die zweite Spulen-Spulenkern-Einrichtung 18 ankoppeln kann. Insbesondere überlappt er die erste Spulen-Spulenkern-Einrichtung 16 und die zweite Spulen-Spulenkern-Einrichtung 18. Er weist dazu einen Überlappbereich 56 für die erste Spulen-Spulenkern-Einrichtung 16 auf und einen zweiten Überlappbereich 58 für die zweite Spulen-Spulenkern-Einrichtung 18. Der erste Überlappbereich 56 und der zweite Überlappbereich 58 sind dadurch definiert, dass sie eine Projektion der ersten Spulen-Spulenkern-Einrichtung 16 bzw. der zweiten Spulen-Spulenkern-Einrichtung 18 in der zweiten Richtung z auf den Geber 12 mit den entsprechend induktiven wirksamen Bereichen sind. Vorzugsweise sind der erste Überlappbereich 56 und der zweite Überlappbereich 58 gleich ausgebildet.

Es ist günstig, wenn der Geber eine Oberseite 60 aufweist, welche der Sensoreinrichtung 14 abgewandt ist, und eine Unterseite 62 aufweist, welche der Sensoreinrichtung 14 zugewandt ist, wobei die Oberseite 60 und die Unterseite 62 parallel zueinander sind. Insbesondere sind die Oberseite 60 und die Unterseite 62 parallel zu der ersten Richtung x ausgerichtet.

Beispielsweise wirkt eine ebene Oberfläche eines Metallobjekts als Geber.

Es kann eine Führungseinrichtung 64 (Figur 2) vorgesehen sein, welche dafür sorgt, dass diese Ausrichtung des Gebers 12 zu der Sensoreinrichtung 14 erhalten bleibt.

Der Geber 12 und die Sensoreinrichtung 14 können grundsätzlich relativ zueinander beweglich sein und dabei in der ersten Richtung x beweglich sein. Dies ist in den Figuren 1 und 2 durch den Doppelpfeil 66 angedeutet. Über die Weg-/Positionsmessvorrichtung 10 ist die relative Position des Gebers 12 in der ersten Richtung x zu der Sensoreinrichtung 14 ermittelbar.

Die erste Richtung x kann dabei eine Linearrichtung sein oder eine gekrümmte Richtung.

Zur Auswertung ist eine Auswertungseinrichtung 68 vorgesehen. Die Auswertungseinrichtung 68 empfängt Ausgangssignale sowohl der ersten Oszillatorschaltung 52 als auch der zweiten Oszillatorschaltung 54. Vorzugsweise führt sie eine Differenzauswertung und/oder Summenauswertung durch und stellt dann einem Ausgang 70 ein Ausgangssignal bereit, welches die Positionsinformation des Gebers 12 für eine Position längs der ersten Richtung x enthält.

Vorzugsweise werden die Oszillatoren der ersten Oszillatorschaltung 52 und der zweiten Oszillatorschaltung 54 mit unterschiedlichen Frequenzen betrieben und insbesondere erregt. Dadurch ist eine Sequenzkopplung vermieden. Ein typischer Frequenzunterschied liegt beispielsweise bei ca. 200 kHz.

Die erste Oszillatorschaltung 52 und die zweite Oszillatorschaltung 54 weisen Sensor-Positions-Kennlinien auf; die Stärke eines Oszillatorausgangssignals hängt ab von der Position des Gebers 12 zu der Sensoreinrichtung 14 bezogen auf die erste Richtung x und die zweite Richtung z. Die Sensoreinrichtung 14 ist so ausgebildet, dass die Kennlinien mindestens näherungsweise einen linearen Bereich aufweisen, in dem die Abhängigkeit von der Position x und z mindestens näherungsweise linear ist. Die Linearität muss dabei nicht exakt sein. Vorzugsweise sind die Abweichungen der Linearität höchstens 20 % und vorzugsweise höchstens 15 %. Bei einem kurzen Messbereich längs der ersten Richtung x kann auch eine Linearitätsabweichung von höchstens 5 % erreicht werden.

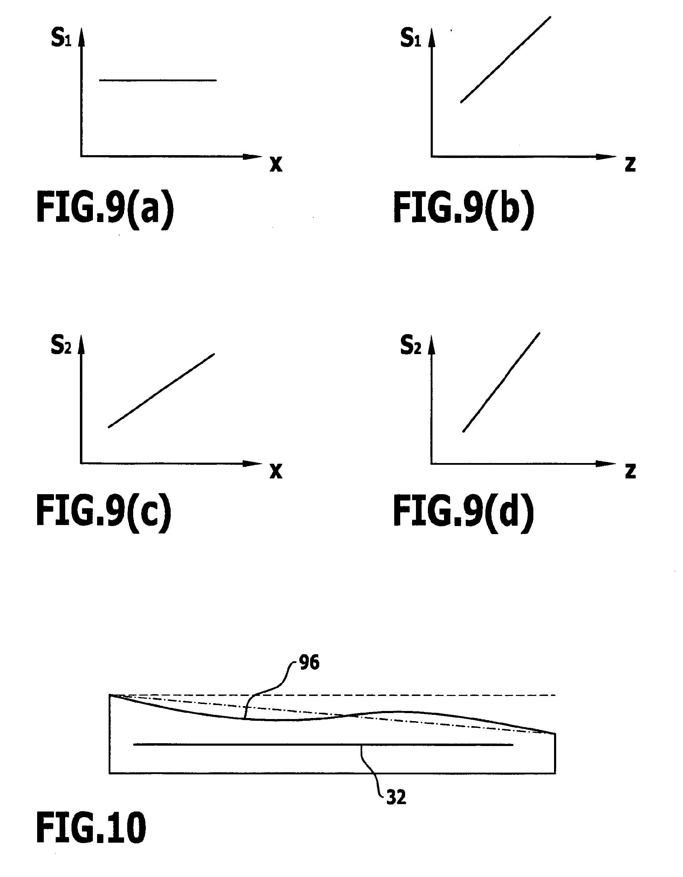

Vorzugsweise wird die Weg-/Positionsmessvorrichtung 10 in dem linearen Bereich betrieben. In Figur 9(a) ist schematisch die Abhängigkeit des Ausgangssignals $S_1$ der ersten Oszillatorschaltung 52 von der Position des Gebers 12 in der ersten Richtung x in einem entsprechenden Messbereich mit linearer Kennlinie angedeutet. Da innerhalb dieses Messbereichs die erste Spulen-Spulenkern-Einrichtung 16 mit einem für die induktive Ankopplung des Gebers 12 wirksamen Bereich in der ersten Richtung x nicht variiert, ist das entsprechende Oszillatorausgangssignal unabhängig von der Position des Gebers 12 längs der ersten Richtung x.

In Figur 9(b) ist die Abhängigkeit des Oszillatorausgangssignals der ersten Oszillatorschaltung 52 in Abhängigkeit von dem Abstand des Gebers 12 zu der zweiten Richtung z angedeutet. Bei dem gezeigten Ausführungsbeispiel nimmt die Stärke des Oszillatorausgangssignals bei Vergrößerung des Abstands zu. Es ist grundsätzlich auch möglich, dass dieses Signal abnimmt.

In Figur 9(c) ist das Oszillatorausgangssignal der zweiten Oszillatorschaltung 54 in Abhängigkeit von der Position des Gebers 12 längs der ersten Richtung x gezeigt. Da die Oberseite 36 des zweiten Spulenkerns 30 relativ zu der ersten Richtung x geneigt ist, nimmt der Abstand des Gebers 12 zur Oberseite 36 mit Vergrößerung von x zu. Der für die induktive Ankopplung wirksame Bereich variiert, das heißt ist abhängig von der Position längs der ersten Richtung x. In Figur 9(c) ist eine lineare Abhängigkeit angedeutet.

Die Abhängigkeit des Oszillatorausgangssignals der zweiten Oszillatorschaltung 54 in der zweiten Richtung z, welche in Figur 9(d) angedeutet ist, entspricht dabei grundsätzlich der Abhängigkeit des Oszillatorausgangssignals der ersten Oszillatorschaltung 52.

Ein Abstand $d_1$ des Gebers 12 zu der ersten Spulen-Spulenkern-Einrichtung 16 ist unabhängig von der Position des Gebers 12 längs der ersten Richtung x. Es liegt keine Variation in dem für die induktive Ankopplung wirksamen Bereich vor.

Ein Abstand $d_2$ des Gebers 12 zu der Oberseite 36 des zweiten Spulenkerns 30 ist abhängig von der Position des Gebers 12 längs der ersten Richtung x, sodass die Stärke der induktiven Ankopplung des Gebers 12 an die zweite Spulen-Spulenkern-Einrichtung 18 abhängig ist von der Position des Gebers 12 längs der ersten Richtung x.

Im linearen Kennlinienbereich kann für das Ausgangssignal (wie beispielsweise eine Ausgangsspannung) der ersten Oszillatorschaltung 52 angesetzt werden:

$$S_1 = A \bullet z + B$$

und für das Ausgangssignal der zweiten Oszillatorschaltung 54:

$$S_2 = A' \bullet z + B' + Cx + D$$

A, A', B, B', C und D sind dabei durch die Eigenschaften der Sensoreinrichtung 14 bestimmt.

Das Differenzsignal $S_2 - S_1$ ergibt sich zu:

$$S_2 - S_1 = (A' - A)z + (B' - B) + Cx - D$$

Man erkennt, dass bei entsprechender Wahl von A und A' die z-Abhängigkeit klein gehalten werden kann und, wenn A und A' identisch sind, diese vollständig eliminiert werden kann. Wenn die erste Spulen-Spulenkern-Einrichtung 16 und die zweite Spulen-Spulenkern-Einrichtung 18 mit hohem Ähnlichkeitsgrad ausgebildet werden, wobei der wesentliche Unterschied die Neigung der Oberseite 36 ist, dann lässt sich die z-Abhängigkeit aus dem Ausgangssignal, welches an dem Ausgangssignal 70 abgreifbar ist, minimieren bzw. sogar vollständig eliminieren.

Es lässt sich dadurch eine z-Kompensation erreichen, d.h. das Ausgangssignal am Anschluss 70 ist unabhängig von der z-Position des Gebers 12. Weiterhin lassen sich parasitäre, seitliche Beeinflussungen beispielsweise einer Einbauumgebung auf die Wegbestimmung bzw. Positionsbestimmung reduzieren.

Durch Verwendung eines entsprechenden Profils der Spulenkerne 20 und 30 lässt sich die Kennlinie der Sensoreinrichtung 14 definiert einstellen. Insbesondere lässt sich die Linearität verbessern. Es ist auch möglich, die Ausflößung zu verbessern. Weiterhin lassen sich Temperaturdrifte leichter kompensieren.

Bei der erfindungsgemäßen Lösung ist der Abstand $d_1$ fest, das heißt er ist unabhängig von der Position des Gebers 12 längs der ersten Richtung x. Der Abstand $d_2$ variiert dagegen in der ersten Richtung x.

Bei der Weg-/Positionsmessvorrichtung 10 ist diese Variation durch Ausbildung des zweiten Spulenkerns 30 erreicht.

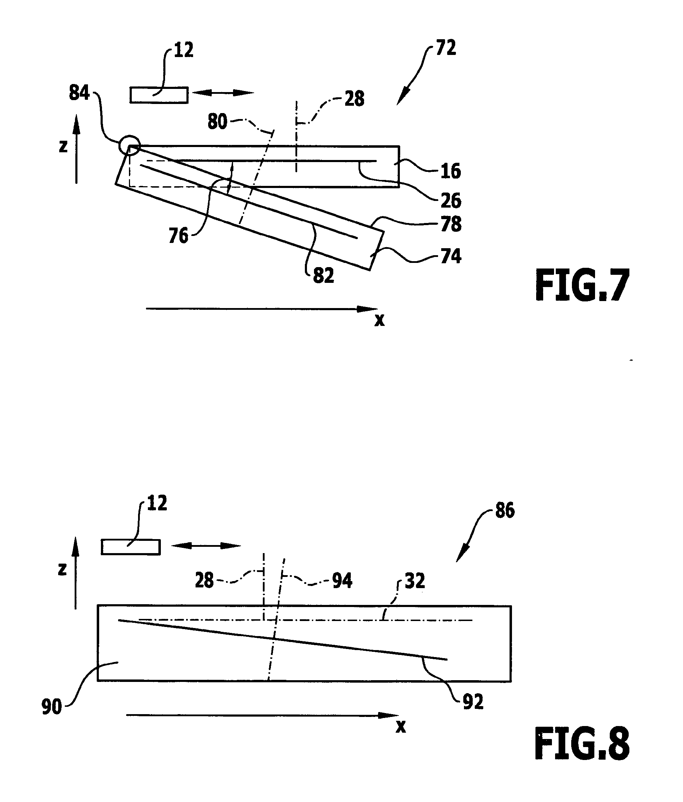

Bei einem zweiten Ausführungsbeispiel einer erfindungsgemäßen Weg-/Positionsmessvorrichtung, welches in Figur 7 schematisch in einer Teildarstellung gezeigt und dort mit 72 bezeichnet ist, ist eine erste Spulen-Spulenkern-Einrichtung grundsätzlich gleich ausgebildet wie diejenige des ersten Ausführungsbeispiels 10. Es wird deshalb ein gleiches Bezugszeichen verwendet. Eine zweite Spulen-Spulenkern-Einrichtung 74 ist grundsätzlich gleich ausgebildet wie die erste Spulen-Spulenkern-Einrichtung 16. Diese ist relativ zu der ersten Richtung x um einen Winkel 76 geneigt. Dadurch ist eine Oberseite 78 der zweiten Spulen-Spulenkern-Einrichtung 74 relativ zu der Oberseite 22 der ersten Spulen-Spulenkern-Einrichtung 16 geneigt.

In diesem Ausführungsbeispiel weist eine zweite Spulenachse 80 einer zweiten Spule 82 eine Winkelorientierung zu der ersten Spulenachse 28 der ersten Spule 26 auf, welche diesem Neigungswinkel zwischen den Oberseiten 78 und 22 entspricht.

Durch die Neigung der zweiten Spulen-Spulenkern-Einrichtung 74 als Ganzes gegenüber der ersten Spulen-Spulenkern-Einrichtung 16 erhält man eine Abstandsvariabilität des Abstands der Oberseite 78 zu dem Geber 12.

Es ist dabei grundsätzlich möglich, dass die zweite Spulen-Spulenkern-Einrichtung 74 beispielsweise über ein Schwenklager 84 schwenkbar gelagert ist, wobei ein entsprechender Schwenkwinkel (zur Einstellung eines Neigungswinkels) feststellbar einstellbar ist. Eine Schwenkachse ist dabei senkrecht zur ersten Richtung x und zur zweiten Richtung z orientiert. Je nach Bedarf lässt sich dann ein gewünschter Neigungswinkel einstellen.

In Figur 7 ist der Neigungswinkel 76 aus darstellerischen Gründen übertrieben gezeichnet. Typische Werte liegen zwischen 0,5° und 10°.

Ansonsten funktioniert die Weg-/Positionsmessvorrichtung 72 wie die Weg-/Positionsmessvorrichtung 10.

Bei einem dritten Ausführungsbeispiel einer erfindungsgemäßen Weg-/Positionsmessvorrichtung, welches in Figur 8 schematisch in einer Teildarstellung gezeigt und dort mit 86 bezeichnet ist, ist eine erste Spulen-Spulenkern-Einrichtung 16 vorgesehen, welche grundsätzlich derjenigen des ersten Ausführungsbeispiels 10 entspricht.

Eine zweite Spulen-Spulenkern-Einrichtung 88 hat einen zweiten Spulenkern 90, an welchem eine zweite Spule 92 angeordnet ist. Eine zweite Spulenachse 94 ist dabei in einem Winkel zu der zweiten Richtung z orientiert und dadurch in einem Winkel zu der ersten Spulenachse 28 orientiert. Die zweite Spule 92 ist dadurch nicht parallel zu der ersten Richtung x ausgerichtet, sondern in dem entsprechenden Neigungswinkel dazu. Dies bewirkt die Abstandsvariabilität der für die induktive Ankopplung wirksamen Bereiche zu dem Geber 12. Die Kopplungsstärke der induktiven Ankopplung hängt von der Position des Gebers 12 längs der ersten Richtung x ab.

Ansonsten funktioniert die Weg-/Positionsmessvorrichtung 86 wie oben beschrieben.

Bei der erfindungsgemäßen Lösung umfasst die Sensoreinrichtung 14 eine erste Spulen-Spulenkern-Einrichtung und eine zweite Spulen-Spulenkern-Einrichtung, welche parallel zueinander angeordnet sind. Ein Geber 12 koppelt gleichzeitig an beide Spulen-Spulenkern-Einrichtungen induktiv an. Während die eine Spulen-Spulenkern-Einrichtung keine Variabilität der induktiven Ankopplung längs der ersten Richtung x (mindestens bezogen auf einen bestimmten Messbereich) aufweist, weist die andere Spulen-Spulenkern-Einrichtung eine entsprechende Variabilität auf. Diese Variabilität kann durch Anordnung und/oder Ausbildung des Spulenkerns erreicht werden und/oder durch Anordnung und/oder Ausbildung der Spule.

Durch die erfindungsgemäße Lösung ist insbesondere eine Minimierung bis zur vollständigen Reduzierung der z-Abhängigkeit des Ausgangssignals am Anschluss 70 erreichbar.

Es ist grundsätzlich so, dass der zweite Spulenkern 30 eine ebene Oberseite 36 aufweisen kann. Es ist auch möglich, wie in Figur 10 angedeutet, dass die Form einer Oberseite 96, welche dem Geber 12 zugewandt ist, von der Ebenheit abweichen kann. Durch gezielte Oberflächengestaltung der Oberseite 96 lässt sich der Kennlinienverlauf beeinflussen und damit auch einstellen. Damit kann beispielsweise gezielt die Linearität verbessert werden bzw. der Linearitätsbereich lässt sich vergrößern.

Es lässt sich dadurch gezielt der Kennlinienverlauf insbesondere bezüglich der Steigung und/oder einer bestimmten Form beeinflussen.

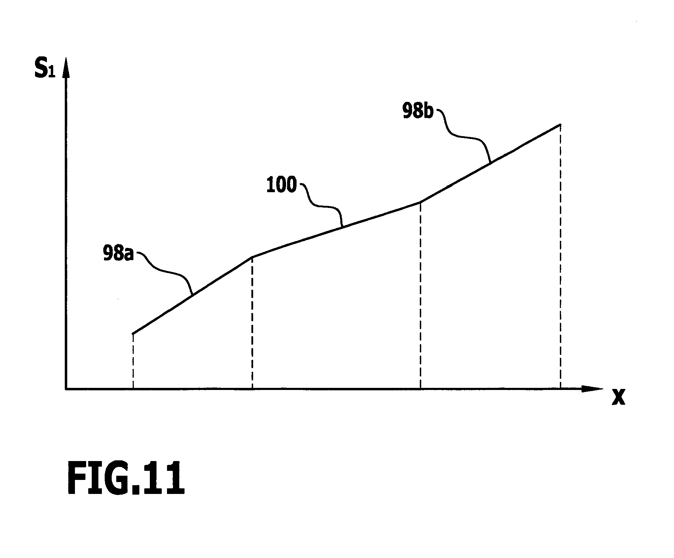

Beispielsweise kann der Kennlinienverlauf auch segmentweise sein, wie in Figur 11 angedeutet. In Grenzbereichen 98a, 98b kann die Verstärkung größer sein als in einem Mittelbereich 100 zwischen den Grenzbereichen 98a, 98b. Ein solcher Kennlinienverlauf ist beispielsweise geeignet zur Erfassung von Spannlagen von Spindelantrieben.

**Patentansprüche**

1. Weg-/Positionsmessvorrichtung, umfassend eine Sensoreinrichtung (14), welche sich in einer ersten Richtung (x) erstreckt, einen Geber (12), welcher in einer zweiten Richtung (z) senkrecht zur ersten Richtung (x) oberhalb der Sensoreinrichtung (14) beabstandet zu dieser positioniert ist, wobei die Sensoreinrichtung (14) und der Geber (12) induktiv koppeln, und eine Auswertungseinrichtung (68), mittels welcher die relative Position der Sensoreinrichtung (14) und des Gebers (12) in der ersten Richtung (x) ermittelbar ist, wobei die Sensoreinrichtung (14) eine erste Spulen-Spulenkern-Einrichtung (16) mit einer an einem ersten Spulenkern (20) angeordneten ersten Spule (26) mit einer ersten Spulenachse (28) aufweist, bei welcher eine dem Geber (12) zugewandte Oberseite (22) des ersten Spulenkerns (20) parallel zur ersten Richtung (x) orientiert ist und die erste Spulenachse (28) senkrecht zur ersten Richtung (x) orientiert ist, und eine zweite Spulen-Spulenkern-Einrichtung (18; 74; 88) mit einer an einem zweiten Spulenkern (30; 90) angeordneten zweiten Spule (32; 82; 92) mit einer zweiten Spulenachse (30; 80; 94) aufweist, bei welcher mindestens eine Einhüllendenebene einer Oberseite (36; 60; 96) des zweiten Spulenkerns (30; 78), welche dem Geber (12) zugewandt ist, gegenüber der ersten Richtung (x) geneigt ist und/oder die zweite Spulenachse (94) gegenüber der ersten Spulenachse (28) geneigt ist.

2. Weg-/Positionsmessvorrichtung nach Anspruch 1, **dadurch gekennzeichnet, dass** die erste Spulen-Spulenkern-Einrichtung (16) und die zweite Spulen-Spulenkern-Einrichtung (18; 74; 88) stabförmig ausgebildet sind.

3. Weg-/Positionsmessvorrichtung nach Anspruch 1 oder 2, **dadurch gekennzeichnet, dass** die erste Spulen-Spulenkern-Einrichtung (16) und die zweite Spulen-Spulenkern-Einrichtung (18; 74; 88) parallel zueinander angeordnet sind.

4. Weg-/Positionsmessvorrichtung nach einem der vorangehenden Ansprüche, **dadurch gekennzeichnet, dass** der Geber (12) ein Metallelement ist.

5. Weg-/Positionsmessvorrichtung nach einem der vorangehenden Ansprüche, **dadurch gekennzeichnet, dass** der Geber (12) die erste Spulen-Spulenkern-Einrichtung (16) und die zweite Spulen-Spulenkern-Einrichtung (18; 74; 88) überlappt.

6. Weg-/Positionsmessvorrichtung nach einem der vorangehenden Ansprüche, **dadurch gekennzeichnet, dass** die Neigung der mindestens einen Einhüllendenebene und/oder die Neigung der zweiten Spulenachse (94) zur ersten Spulenachse (28) in einem Bereich zwischen 0,5° und 10° liegt.

7. Weg-/Positionsmessvorrichtung nach einem der vorangehenden Ansprüche, **dadurch gekennzeichnet, dass** bei der ersten Spulen-Spulenkern-Einrichtung (16) die erste Spule (26) und bei der zweiten Spulen-Spulenkern-Einrichtung (18; 74; 88) die zweite Spule (32; 82; 92) gegenüber der jeweiligen Oberseite (36; 60; 96) zurückgesetzt angeordnet sind.

8. Weg-/Positionsmessvorrichtung nach einem der vorangehenden Ansprüche, **dadurch gekennzeichnet, dass** die zweite Spulen-Spulenkern-Einrichtung (74) als Ganzes gegenüber der ersten Richtung geneigt ist, und insbesondere **dadurch gekennzeichnet, dass** der Neigungswinkel (76) feststellbar einstellbar ist.

9. Weg-/Positionsmessvorrichtung nach einem der vorangehenden Ansprüche, **gekennzeichnet durch** eine erste Oszillatorschaltung (52), welche die erste Spule (26) umfasst, und eine zweite Oszillatorschaltung (54), welche die zweite Spule (32; 82; 92) umfasst, und insbesondere **dadurch** gekennzeichnet, dass die erste Oszillatorschaltung (52) und die zweite Oszillatorschaltung (54) unterschiedliche Oszillatorfrequenzen aufweisen.

10. Weg-/Positionsmessvorrichtung nach Anspruch 9, **dadurch gekennzeichnet, dass** die Auswertungseinrichtung (68) eine Differenzauswertung und/oder Summenauswertung von Oszillatorausgangssignalen der ersten Oszillatorschaltung (52) und der zweiten Oszillatorschaltung (54) durchführt.

11. Weg-/Positionsmessvorrichtung nach Anspruch 9 oder 10, **gekennzeichnet durch** einen Betrieb der ersten Oszillatorschaltung (52) und der zweiten Oszillatorschaltung (54) in einem Bereich mit mindestens näherungsweise linearer Kennlinie.

12. Weg-/Positionsmessvorrichtung nach einem der vorangehenden Ansprüche, **dadurch gekennzeichnet, dass** die Oberseite (22) der ersten Spulen-Spulenkern-Einrichtung (16) eben ist.

13. Weg-/Positionsmessvorrichtung nach einem der vorangehenden Ansprüche, **dadurch gekennzeichnet, dass** die Oberseite (36; 60; 96) der zweiten Spulen-Spulenkern-Einrichtung (18; 74; 88) eben ist oder eine Abweichung von der Ebenheit zur Kennlinieneinstellung aufweist.

14. Weg-/Positionsmessvorrichtung nach einem der vorangehenden Ansprüche, **dadurch gekennzeichnet, dass** bei unterschiedlichen Positionen des Gebers (12) längs der ersten Richtung (x) der Abstand des Gebers (12) in der zweiten Richtung (z) zu einem Bereich der ersten Spulen-Spulenkern-Einrichtung (16), welcher für die induktive Ankopplung des Gebers (12) wirksam ist, konstant ist, und insbesondere **dadurch gekennzeichnet, dass** der Abstand ($d_1$) des Gebers (12) zu der Oberseite (22) der ersten Spulen-Spulenkern-Einrichtung (16) konstant ist und der Abstand zu der ersten Spule (26) konstant ist.

15. Weg-/Positionsmessvorrichtung nach einem der vorangehenden Ansprüche, **dadurch gekennzeichnet, dass** der Abstand ($d_2$) des Gebers (12) in der zweiten Richtung (z) zu einem für die induktive Ankopplung des Gebers (12) wirksamen Bereich der zweiten Spulen-Spulenkern-Einrichtung (18; 74; 88) abhängig ist von der Position des Gebers (12) längs der ersten Richtung (x).

**Claims**

1. Path/position measuring device, comprising a sensor device (14) extending in a first direction (x), a transducer (12) positioned above the sensor device (14) at a distance therefrom in a second direction (z) perpendicular to the first direction (x), the sensor device (14) and the transducer (12) being coupled inductively, and an evaluating device (68) by means of which the relative position of the sensor device (14) and the transducer (12) can be determined in the first direction (x), the sensor device (14) comprising a first coil-coil core-device (16) with a first coil (26) arranged on a first coil core (20) and having a first coil axis (28), in which first coil-coil core-device an upper side (22), facing the transducer (12), of the first coil core (20) is orientated parallel to the first direction (x), and the first coil axis (28) is orientated perpendicularly to the first direction (x), and a second coil-coil core-device (18; 74; 88) with a second coil (32; 82; 92) arranged on a second coil core (30; 90) and having a second coil axis (30; 80; 94), in which second coil-coil core-device at least one envelope plane of an upper side (36; 60; 96) of the second coil core (30; 78), which faces the transducer (12), is inclined in relation to the first direction (x) and/or the second coil axis (94) is inclined in relation to the first coil axis (28).

2. Path/position measuring device in accordance with claim 1, **characterized in that** the first coil-coil core-device (16) and the second coil-coil core-device (18; 74; 88) are of bar-shaped construction.

3. Path/position measuring device in accordance with claim 1 or 2, **characterized in that** the first coil-coil core-device (16) and the second coil-coli core-device (18; 74; 88) are arranged parallel to each other.

4. Path/position measuring device in accordance with any one of the preceding claims, **characterized in that** the transducer (12) is a metal element.

5. Path/position measuring device in accordance with any one of the preceding claims, **characterized in that** the transducer (12) overlaps the first coil-coil core-device (16) and the second coil-coil core-device (18; 74; 88).

6. Path/position measuring device in accordance with any one of the preceding claims, **characterized in that** the inclination of the at least one envelope plane and/or the inclination of the second coil axis (94) to the first coil axis (28) lies in a range of between 0.5° and 10°.

7. Path/position measuring device in accordance with any one of the preceding claims, **characterized in that** in the first coil-coil core-device (16) the first coil (26) and in the second coil-coil core-device (18; 74; 88) the second coil (32; 82; 92) are arranged so as to be set back in relation to the respective upper side (36; 60; 96).

8. Path/position measuring device in accordance with any one of the preceding claims, **characterized in that** the second coil-coil core-device (74) is inclined in its entirety in relation to the first direction, and, in particular, **characterized in that** the angle of inclination (76) can be set in a fixable manner.

9. Path/position measuring device in accordance with any one of the preceding claims, **characterized by** a first oscillator circuit (52) which comprises the first coil (26), and a second oscillator circuit (54) which comprises the second coil (32; 82; 92), and, in particular, **characterized in that** the first oscillator circuit (52) and the second oscillator circuit (54) have different oscillator frequencies.

10. Path/position measuring device in accordance with claim 9, **characterized in that** the evaluating device (68) carries out an evaluation of the difference and/or an evaluation of the total of oscillator output signals of the first oscillator circuit (52) and the second oscillator circuit (54).

11. Path/position measuring device in accordance with claim 9 or 10, **characterized by** an operation of the first oscillator circuit (52) and the second oscillator circuit (54) in a range with at least approximately linear characteristic.

12. Path/position measuring device in accordance with any one of the preceding claims, **characterized in that** the upper side (22) of the first coil-coil core-device (16) is flat.

13. Path/position measuring device in accordance with any one of the preceding claims, **characterized in that** the upper side (36; 60; 96) of the second coil-coil core-device (18; 74; 88) is flat or exhibits a deviation from the flatness for setting the characteristic.

14. Path/position measuring device in accordance with any one of the preceding claims, **characterized in that** at different positions of the transducer (12) along the first direction (x) the distance of the transducer (12) in the second direction (z) from an area of the first coil-coil core-device (16) that is effective for the inductive coupling of the transducer (12) is constant, and, in particular, **characterized in that** the distance ($d_1$) of the transducer (12) from the upper side (22) of the first coil-coil core-device (16) is constant, and the distance from the first coil (26) is constant.

15. Path/position measuring device in accordance with any one of the preceding claims, **characterized in that** the distance ($d_2$) of the transducer (12) in the second direction (z) from an area of the second coil-coil core-device (18; 74; 88) that is effective for the inductive coupling of the transducer (12) is dependent upon the position of the transducer (12) along the first direction (x).

**Revendications**

1. Système de mesure de course/de position, comprenant un dispositif de détection (14) qui s'étend dans une première direction (x), un transmetteur (12) placé au-dessus et espacé du dispositif de détection (14) dans une deuxième direction (z) perpendiculaire à la première direction (x), le dispositif de détection (14) et le transmetteur (12) étant couplés par induction, et un dispositif d'analyse (68) au moyen duquel la position relative du dispositif de détection (14) et du transmetteur (12) peut être déterminée dans la première direction (x), le dispositif de détection (14) comportant un premier dispositif bobine-noyau de bobine (16) avec une première bobine (26) disposée sur un premier noyau de bobine (20) avec un premier axe de bobine (28), où une face supérieure (22) du premier noyau de bobine (20) opposée au transmetteur (12) est orientée parallèlement à la première direction (x) et où le premier axe de bobine (28) est orienté perpendiculairement à la première direction (x), et un deuxième dispositif bobine-noyau de bobine (18 ; 74 ; 88) avec une deuxième bobine (32 ; 82 ; 92) disposée sur un deuxième noyau de bobine (30 ; 90) avec un deuxième axe de bobine (30 ; 80 ; 94), où au moins un plan d'enveloppe d'une face supérieure (36 ; 60 ; 96) du deuxième noyau de bobine (30 ; 78) opposée au transmetteur (12) est incliné par rapport à la première direction (x) et/ou le deuxième axe de bobine (94) est incliné par rapport au premier axe de bobine (28).

2. Système de mesure de course/de position selon la revendication 1, **caractérisé en ce que** le premier dispositif bobine-noyau de bobine (16) et le deuxième dispositif bobine-noyau de bobine (18 ; 74 ; 88) sont réalisés en forme de barre.

3. Système de mesure de course/de position selon la revendication 1 ou 2, **caractérisé en ce que** le premier dispositif bobine-noyau de bobine (16) et le deuxième dispositif bobine-noyau de bobine (18 ; 74 ; 88) sont disposés parallèlement l'un à l'autre.

4. Système de mesure de course/de position selon l'une des revendications précédentes, **caractérisé en ce que** le transmetteur (12) est un élément métallique.

5. Système de mesure de course/de position selon l'une des revendications précédentes, **caractérisé en ce que** le transmetteur (12) chevauche le premier dispositif bobine-noyau de bobine (16) et le deuxième dispositif bobine-noyau de bobine (18 ; 74 ; 88).

6. Système de mesure de course/de position selon l'une des revendications précédentes, **caractérisé en ce que** l'inclinaison du ou des plans d'enveloppe et/ou l'inclinaison du deuxième axe de bobine (94) par rapport au premier axe de bobine (28) sont comprises entre 0,5° et 10°.

**7.** Système de mesure de course/de position selon l'une des revendications précédentes, **caractérisé en ce que** la première bobine (26) pour le premier dispositif bobine-noyau de bobine (16) et la deuxième bobine (32 ; 82 ; 92) pour le dispositif bobine-noyau de bobine (18 ; 74 ; 88) sont disposées en retrait par rapport à la face supérieure (36 ; 60 ; 96) respective.

**8.** Système de mesure de course/de position selon l'une des revendications précédentes, **caractérisé en ce que** le deuxième dispositif bobine-noyau de bobine (74) est incliné dans son ensemble par rapport à la première direction, et caractérisé en particulier **en ce que** l'angle d'inclinaison (76) est réglable de manière à être fixé.

**9.** Système de mesure de course/de position selon l'une des revendications précédentes, **caractérisé par** un premier circuit d'oscillateur (52) qui comprend la première bobine (26), et par un deuxième circuit d'oscillateur (54) qui comprend la deuxième bobine (32 ; 82 ; 92), et caractérisé en particulier en ce que le premier circuit d'oscillateur (52) et le deuxième circuit d'oscillateur (54) présentent des fréquences d'oscillateur différentes.

**10.** Système de mesure de course/de position selon la revendication 9, **caractérisé en ce que** le dispositif d'analyse (68) procède à une évaluation de la différence et/ou une évaluation du total des signaux de sortie d'oscillateur du premier circuit d'oscillateur (52) et du deuxième circuit d'oscillateur (54).

**11.** Système de mesure de course/de position selon la revendication 9 ou 10, **caractérisé par** un fonctionnement du premier circuit d'oscillateur (52) et du deuxième circuit d'oscillateur (54) dans une plage avec au moins une caractéristique sensiblement linéaire.

**12.** Système de mesure de course/de position selon l'une des revendications précédentes, **caractérisé en ce que** la face supérieure (22) du premier dispositif bobine-noyau de bobine (16) est plane.

**13.** Système de mesure de course/de position selon l'une des revendications précédentes, **caractérisé en ce que** la face supérieure (36 ; 60 ; 96) du deuxième dispositif bobine-noyau de bobine (18 ; 74 ; 88) est plane ou s'écarte de la planéité pour le réglage de caractéristique.

**14.** Système de mesure de course/de position selon l'une des revendications précédentes, **caractérisé en ce que** dans différentes positions du transmetteur (12) le long de la première direction (x), l'espacement du transmetteur (12) dans la deuxième direction (z) à une zone du premier dispositif bobine-noyau de bobine (16) active pour le couplage par induction du transmetteur (12) est constant, et caractérisé en particulier **en ce que** l'espacement ($d_1$) du transmetteur (12) à la face supérieure (22) du premier dispositif bobine-noyau de bobine (16) est constant, et l'espacement à la première bobine (26) est constant.

**15.** Système de mesure de course/de position selon l'une des revendications précédentes, **caractérisé en ce que** l'espacement ($d_2$) du transmetteur (12) dans la deuxième direction (z) à une zone du deuxième dispositif bobine-noyau de bobine (18 ; 74 ; 88) active pour le couplage par induction du transmetteur (12) est fonction de la position du transmetteur (12) le long de la première direction (x).

FIG.1

FIG.2

FIG.3

**FIG.4**

**FIG.5**

**FIG.6**

FIG.7

FIG.8

FIG.9(a)

FIG.9(b)

FIG.9(c)

FIG.9(d)

FIG.10

**FIG.11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3914787 A1
- DE 1284101

- DE 102004032258 A1
- DE 10354694 A1